(19) **Europäisches Patentamt**
**European Patent Office**
**Office européen des brevets**

(11) **EP 1 742 789 B1**

(12) **EUROPÄISCHE PATENTSCHRIFT**

(45) Veröffentlichungstag und Bekanntmachung des Hinweises auf die Patenterteilung:
**19.08.2009 Patentblatt 2009/34**

(51) Int Cl.:
***B32B 5/26*** *(2006.01)*   ***A41D 13/12*** *(2006.01)*

(21) Anmeldenummer: **05752761.6**

(22) Anmeldetag: **19.04.2005**

(86) Internationale Anmeldenummer:
**PCT/EP2005/004131**

(87) Internationale Veröffentlichungsnummer:
**WO 2005/113231 (01.12.2005 Gazette 2005/48)**

(54) **VLIES-/FOLIENLAMINAT**

NON-WOVEN/SHEET LAMINATE

AGGLOMERE LAMINE EN NON-TISSES OU FEUILLES

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **07.05.2004 DE 102004024043**

(43) Veröffentlichungstag der Anmeldung:
**17.01.2007 Patentblatt 2007/03**

(73) Patentinhaber: **Paul Hartmann Aktiengesellschaft 89522 Heidenheim (DE)**

(72) Erfinder: **STEGER, Alexandra 4850 Timelkam (AT)**

(74) Vertreter: **Langöhrig, Angelika Beate et al Dreiss Patentanwälte Postfach 10 37 62 70032 Stuttgart (DE)**

(56) Entgegenhaltungen:
| | |
|---|---|
| **EP-B- 0 912 788** | **WO-A-00/73058** |
| **WO-A-01/36188** | **WO-A-97/02130** |
| **WO-A-99/14262** | **WO-A-03/049937** |
| **WO-A-03/086758** | **WO-A-20/04037026** |
| **US-A- 4 196 245** | **US-A- 6 037 281** |

**Beschreibung**

Die Erfindung betrifft ein Vlies-/Folienlaminat umfassend eine Folie und auf beiden Seiten der Folie eine Vliesschicht.

Vlies-/Folienlaminate sind aus dem Stand der Technik vielfach bekannt. So beschreibt beispielsweise die WO 99/14262 ein Vlies-/Folienlaminat umfassend eine Polyethylenfolie, die einen Füllstoff beinhaltet, um der Folie eine Mikroporosität verleihen zu können, wobei der Film und ein Vliesstoff zusammenlaminiert werden. Dabei kann vorgesehen sein, dass auf einer oder beiden Seiten des Films ein Vlies aufgebracht sein kann.

Vliesstoffe besitzen den Vorteil, neben einer mechanischen Festigkeit, die sie einer Folie verleihen können, taktile Eigenschaften zu besitzen, die insbesondere bei Bekleidungsstücken ein angenehmeres Trageverhalten als Folienstoffe gewährleisten. Derartige Laminate finden daher z. B. für Bekleidungsstoffe, für den OP-Bereich, aber auch im biotechnologischen und chemischen Bereich Verwendung.

Trotz ihres gegenüber Folien angenehmeren taktilen Gefühls stellen auch Vliesstoffe ein Material dar, das eine besonders glatte Oberfläche bietet. Eine derartige glatte Oberfläche besitzt immer noch den Nachteil, dass die gewünschten Eigenschaften eines textilen Materials im Anfassverhalten nicht sicher erreicht werden.

Darüber hinaus ist aus einer Vielzahl von Druckschriften bekannt, Laminate vorzusehen, bei denen auf einer Seite eines Films ein Vliesstoff bzw. Nonwoven aufgebracht ist, so beispielsweise aus der WO 00/20208, wobei ein entsprechendes Laminat dort für den Einsatz im Bereich von OP-Materialien dienen soll.

Des Weiteren ist beispielsweise aus der EP 1 298 240 A1 ein Laminat bekannt, bei dem auf einer Seite eines Spunbond-Nonwovens eine Folie aufgebracht sein kann. Dabei soll vorgesehen sein, dass die Spunbond-Seite des Laminats einen statischen Reibungskoeffizienten von 0,1 bis 0,4 aufweist, um die Anfasseigenschaften zu verbessern.

Weitere Vlies-/Folienlaminatstoffe sind beispielsweise aus der EP 0 912 788 B1 bekannt, die ein Film-/Vliesstofflaminat mit klebstoffverstärktem und verstrecktem Film offenbart.

Schließlich offenbart die WO 97/02130 ein dreidimensionales texturiertes Vlies-/Folienlaminat, bei dem durch eine stärkere Schrumpfung die Vliesschicht aufgeworfen wird und nur noch partiell mit der weiteren Schicht verbunden ist.

Es soll nun Aufgabe der vorliegenden Erfindung sein, ein Vlies-/Folienlaminat bereitzustellen, das insbesondere im Bereich von Materialien für den Einsatz bei Operationen geeignet sein soll, umfassend eine Folie und auf beiden Seiten der Folie eine Vliesschicht, bei dem die taktilen Eigenschaften des Vliesstoffs möglichst denen eines textilen Materials entsprechen und auf der anderen Seite notwendige Kriterien für den Einsatz derartiger Materialien ebenfalls erreicht werden, wie z. B. Wasserdampfdurchlässigkeit, Wasserundurchlässigkeit, mechanische Stabilität. Des Weiteren soll ein Material geschaffen werden, das bei seiner Verwendung als Arbeitsmittel einen sicheren Arbeitsablauf gewährleistet.

Die Erfindung löst diese Aufgabe durch ein Vlies-/Folienlaminat mit den Merkmalen des Anspruchs 1. Dabei weist mindestens eine eine Sichtseite des Laminats bildende Oberfläche der Vliesschicht einen Gleitreibungskoeffizienten $\mu$ zwischen $\mu = 0,35$ und $0,75$ auf.

Insbesondere kann der Gleitreibungskoeffizient zwischen $\mu = 0,40$ und $0,70$ und insbesondere zwischen $0,45$ und $0,65$ liegen. Bei einem derartigen Gleitreibungskoeffizient wird eine ausreichende Rauigkeit der Oberfläche erzielt, um den haptischen Eindruck des Vlies-/Folienlaminats einer Textilie zu erwirken. Insbesondere soll der Gleitreibungskoeffizient in Ebenenrichtung des Laminats in beide Richtungen (Maschinen- und Querrichtung der Herstellung des Laminats) gleich sein. Hierdurch muss bei der Weiterverarbeitung des Laminats nichts Besonderes beachtet werden.

Reibung ist der Widerstand, den zwei aufeinander liegende Oberflächen dem Gleiten entgegensetzen. Man unterscheidet Haft- und Gleitreibung. Dabei ist die Haftreibung (statische Reibung) die Reibung, die bei Beginn der Gleitbewegung als Schwellenwert zwischen relativ zueinander ruhenden Körpern vorliegt und bei denen die angreifende Kraft nicht ausreicht um eine Relativbewegung hervorzurufen.

Die Gleitreibung ist dagegen die Reibung, die unmittelbar nach Überwindung der Haftreibung bei der vorgegebenen Gleitgeschwindigkeit zwischen relativ zueinander bewegten Körpern noch wirksam bleibt. Hierbei ist die Gleitreibungskraft $F_D$ die Kraft, die notwendig ist, um die Gleitreibung zu überwinden. Der Gleitreibungskoeffizient $\mu$ bestimmt sich durch das Verhältnis der Gleitreibungskraft zur Normalkraft $F_N$ durch: $\mu = F_D / F_N$.

Durch die erhöhte Rauigkeit ergeben sich bei aus dem Material hergestellten Waren, wie OP-Mänteln aber auch Abdecktüchern für ein Operationsfeld etc. Vorteile, da hier durch eine zu große Glattheit des Materials es zu einem Abrutschen kommen kann und damit die Arbeitssicherheit beeinträchtigt wird. Das erfindungsgemäße Material wirkt damit rutschhemmend.

Insbesondere ist dabei erfindungsgemäß keine zusätzliche mechanische oder chemische Behandlung der Oberfläche zur Erhöhung der Rauigkeit vorgesehen oder notwendig. Auch ist insbesondere keine zusätzliche Beschichtung, Imprägnierung oder das Einbringen von weiteren Mitteln zur Erhöhung der Rauigkeit der Oberfläche vorgesehen oder notwendig.

Darüber hinaus soll nach einem besonders bevorzugten Ausführungsbeispiel vorgesehen sein, dass die mindestens eine eine Sichtseite des Laminats bildende Oberfläche zusätzlich einen Linting-Koeffizienten kleiner 2,7 aufweist, insbesondere kleiner 2,5 und insbesondere kleiner 2,2. Mittels des Linting-Koeffizienten wird die Neigung eines Materials bestimmt, Partikel abzugeben. Eine derartige Partikelfreisetzung ist insofern von Interesse, da beispielsweise bei Materialien, die im OP-Bereich Verwendung finden sollen, möglichst wenig Partikel aus Sterilitätsgründen und Gründen der Verunreinigung des Operationsfeldes freigesetzt werden sollen. Doch auch in anderen Anwendungsbereichen, in denen es insbesondere um besondere Reinheit der Arbeitsatmosphäre geht, ist eine Partikelfreisetzung unerwünscht. Ein Linting-Koeffizient kleiner 2,7, insbesondere kleiner 2,5, insbesondere kleiner 2,2 entspricht dabei einer Partikelanzahl (Partikel größer 3 $\mu$m) bezogen auf die Probe, wie im nachfolgend beschriebenen Test näher spezifiziert ist von unter 500 Partikeln, insbesondere von unter 320 Partikeln und insbesondere unter 160 Partikeln.

Bei einer derartig geringen Freisetzung an Partikeln wird trotz der erhöhten Rauigkeit, die im Stand der Technik stets mit einer erhöhten Partikelfreisetzung einhergeht, da ansonsten üblich ein Aufrauen der Oberfläche mechanisch erfolgt, eine geringstmögliche Freisetzung von Eigenpartikeln erreicht und damit ein Arbeitsumfeld geschaffen, in dem ein derartiger Stoff eingesetzt werden kann, das höchsten Reinheitsanforderungen entspricht.

Dabei ist das Laminat nicht zusätzlich oberflächenbehandelt oder hydrophobisiert. Vielmehr handelt es sich um ein selbständig hydrophobes Laminat, bei dem insbesondere die Vliesschichten hydrophob sind. Im Sinn dieser Schrift sind die Begriffe mehrschichtig und mehrlagig sowie Lage und Schicht synonym verwendet.

Dabei ist vorgesehen, dass die Vliesschicht auf einer oder auf beiden Seiten der Folie mehrschichtig ausgebildet sein kann. Es sind hierbei Spunbond- und Meltblownschichten vorgesehen, die insbesondere als Spunbond/Meltblown/Spunbond-Schichten oder auch Spunbond/Meltblown/Meltblown/Spunbond-Schichten abwechselnd angeordnet sind. Dabei ist vorzugsweise als nach außen weisende Schicht eine Spunbond-Schicht vorgesehen. Auf diese Weise können günstige Charakteristiken der Vliesschicht erzeugt werden, insbesondere da neben der Folie auch Meltblownschichten eine gewisse Flüssigkeitsrückhaltung gewährleisten. Das Vlies kann vorzugsweise thermoverfestigt sein, beispielsweise mittels eines Rautenkalanders. Die Herstellung des Vlies-/Folienlaminats kann dabei in einem einzigen Verfahrensschritt erfolgen, oder alternativ können die Vliesschichten zunächst separat hergestellt werden, um sie dann mit der Folie zu verbinden.

Bei der Folie kann es sich insbesondere um eine wasserundurchlässige, aber wasserdampfdurchlässige Folie handeln. Daraus resultiert, dass das Laminat eine Wasserdampfdurchlässigkeit (WVTR) von insbesondere größer 4000 g/m$^2$/24h aufweist. Weiterhin weist das Laminat eine Wasserresistenz auf, die durch die Wassersäule bestimmt wird, von insbesondere größer 400 cm und ganz insbesondere größer 500 cm.

Die Folie kann dabei insbesondere mikroporös sein. Eine derartige Mikroporosität kann insbesondere in eine Folie eingebracht werden, indem diese mit einem nicht polymeren, partikelförmigen Füllstoff, insbesondere Kalziumkarbonat versehen ist, und die Folie nach Herstellung derart verstreckt wird, dass sich an den Phasengrenzen zwischen Kunststoff und dem Füllstoff Kapillaren ausbilden, die auch nach der Entlastung der Folie erhalten bleiben.

Die Folie kann dabei Polyolefine, vorzugsweise Polyethylene umfassen. Insbesondere kann vorgesehen sein, dass die Folie aus einem thermoplastischen Polymerblend umfassend zwei oder mehr verschiedene Polyethylene bestehen kann. Insbesondere kann der Polymerblend LDPE und LLDPE umfassen.

Dabei ist vorgesehen, dass das Vlies-/Folienlaminat durch einen Wärmebehandlungsvorgang hergestellt ist, mit dem eine Längenverkürzung in Ebenenrichtung einhergeht. Die Längenverkürzung in Ebenenrichtung kann dabei vorzugsweise in nur einer Richtung der Ebene (Vorzugsrichtung) erfolgen, wobei hier unter Längenverkürzung in nur einer Richtung verstanden werden soll, dass die Längenverkürzung senkrecht zur Vorzugsrichtung höchstens 1/10 der Längenverkürzung der Vorzugsrichtung betragen soll. Die Längenverkürzung in zumindest eine Richtung beträgt dabei mindestens 2 % und insbesondere mindestens 3 % der Länge der Probe in dieser Richtung. Die Längenverkürzung in zumindest eine Richtung beträgt dabei höchstens 6 % der Länge der Probe in dieser Richtung. Dabei können insbesondere Temperaturen zwischen 45 und 100° C und insbesondere zwischen 45 und 90° C sowie insbesondere zwischen 45 und 80° C und weiter insbesondere zwischen 50 und 65° C während der Wärmebehandlung eingesetzt werden.

Die Schrumpfung bzw. Längenverkürzung in Ebenenrichtung wird dabei insbesondere in der Richtung erfolgen, die der Maschinenrichtung (MD) bei der Herstellung des Vlies/Folienlaminates entspricht. Besonders vorteilhaft kann vorgesehen sein, wenn die Längenverkürzung mit einem Sterilisationsschritt des Materials bzw. insbesondere des fertigen Produktes kombiniert werden kann, so dass kein zusätzlicher Verfahrensschritt notwendig ist. Darüber hinaus erfolgt durch die Längenverkürzung in eine Richtung eine Vergrößerung der Dicke des Laminats, wobei das Laminat bzw. insbesondere der Vliesstoff aufgeworfen wird und sich so Fasern des Vliesstoffes aufwölben, so dass eine Verbesserung des Reibungskoeffizienten erzielt wird. Die Fasern werden jedoch nicht wie sonst bei einer mechanischen Aufrauung aus dem Vlies gelöst.

Dabei kann vorgesehen sein, dass durch die Längenverkürzung eine Dickenzunahme von größer 30 %, insbesondere größer 40 % und insbesondere größer 50 % erzielt wird. Erfindungsgemäße Laminate können dabei vorzugsweise eine Dicke von 0,2 bis 1,0 mm, besonders 0,3 bis 0,8 mm und ganz besonders 0,4 bis 0,6 mm vor der Wärmebehandlung besitzen. Des Weiteren können erfindungsgemäße Laminate vorzugsweise eine Dicke von 0,3 bis 1,5 mm, besonders 0,4 bis 1,0 mm und ganz besonders 0,5 bis 0,7 mm nach der Wärmebehandlung besitzen.

Die Schichten, nämlich die Folie mit den Vliesschichten können über einen Kleber, der insbesondere nicht vollflächig aufgebracht ist und insbesondere ein Schmelzkleber ist, verbunden sein. Ein Verfahren zu einem nicht vollflächigen Auftrag ist z.B. ein Kontaktverfahren gemäß der EP 568 812 A1. Alternativ kann eine Verbindung der Schichten mittels thermischer Verfestigungsverfahren oder Ultraschallverbinden erfolgen.

In einer besonders bevorzugten Ausführungsform kann vorgesehen sein, dass das Vlies-/Folienlaminat symmetrisch zur Folie aufgebaut ist. Dabei kann sowohl eine Symmetrie hinsichtlich des Schichtenaufbaus d.h. hinsichtlich der Anzahl und Abfolge der Spunbond- und Meltblown-Schichten gegeben sein als auch hinsichtlich der zur Herstellung der einzelnen Spunbond- oder Meltblown-Schichten verwendeten Materialien vorgesehen sein. Darüber hinaus kann hinsichtlich der Symmetrie auch die verschiedene Charakteristik der Seiten der Vliesschichten berücksichtigt werden, die sich durch den Herstellungsprozess ergeben kann.

Des Weiteren umfasst die Erfindung eine Verwendung eines Vlies-/Folienlaminats für ein wegwerfbares insbesondere sterilisierbares Bekleidungsstück, wobei insbesondere vorgesehen sein kann, dass die flächenbildenden Wandungen des Bekleidungsstücks aus einem entsprechenden Vlies-/Folienlaminat gebildet sind. Darüber hinaus kann das Material auch für Abdeckungen insbesondere im OP-Bereich und Kleidungsstücke im OP-Bereich, wie OP-Mäntel und -Kittel aber auch OP-Hauben etc. Verwendung finden.

Schließlich umfasst die Erfindung noch ein selbstständig erfinderisches Verfahren zur Herstellung eines Vlies-/Folienlaminats, wobei ein Schichtenverbund aus Folie und den mit der Folie beidseitig verbundenen Vliesschichten einer Wärmebehandlung unterzogen wird, und dabei eine Längenverkürzung in Ebenenrichtung des Schichtenverbunds herbeigeführt wird. Dabei können insbesondere Temperaturen zwischen 45 und 100° C und insbesondere zwischen 45 und 90° C sowie insbesondere zwischen 45 und 80° C und weiter insbesondere zwischen 50 und 65° C während der Wärmebehandlung angesetzt sein. Es kann vorgesehen sein, dass eine Längenverkürzung insbesondere nur in einer Ebenenrichtung vorgesehen ist, wobei hier unter Längenverkürzung in nur einer Richtung verstanden werden soll, dass die Längenverkürzung senkrecht zur Vorzugsrichtung höchstens 1/10 der Längenverkürzung der Vorzugsrichtung betragen soll. Die Längenverkürzung in zumindest eine Richtung beträgt dabei mindestens 2 % und insbesondere mindestens 3 % der Länge der Probe in dieser Richtung. Die Längenverkürzung in zumindest eine Richtung beträgt dabei höchstens 6 % der Länge der Probe in dieser Richtung.

Im Folgenden sollen die angewandten Prüfmethoden näher erläutert werden.

Gleitreibungskoeffizient:

Die Messung des Reibungsverhaltens erfolgte gemäß DIN 53375, wobei folgende Prüfgeräte eingesetzt wurden:

- hydraulische Stanze
- Stanzmesser 65 x 200 mm $\pm$ 0,25 mm
- Stanzmesser 150 x 300 mm $\pm$ 0,25 mm
- Zugprüfmaschine nach DIN 51221 Klasse 1
- Zusatzgerät bestehend aus Probentisch mit Abzugschlitten
- Reibklotz nach DIN 53375 (Hersteller F. A. Zwick/Roell).

Probenvorbereitung: Die Proben müssen mindestens 16 Stunden im Normklima DIN 50014 - 23/50-2 - gelagert werden. Die Proben dürfen nicht geknickt, gefaltet oder zerkratzt sein, Fingerabdrücke, Staub und andere Verunreinigungen sind zu vermeiden.

Die Prüfung erfolgt dabei Laminataußenseite gegen Laminataußenseite, d.h., dass die selben Seiten gegeneinander geprüft werden, wobei bei der Messung die Maschinenrichtung und die Querrichtung des Laminats berücksichtigt wurden und jeweils gleiche Richtungen des Laminats gegeneinander gemessen wurden.

Prüfverfahren: Probenkörper 1 (150 x 300 mm) wird möglichst deckungsgleich mit der Grundplatte des Probentisches befestigt. Der Probenkörper 2 (65 x 200 mm) wird in den Reibklotz faltenfrei eingespannt und mittels eines Fadens (ohne Eigendrehung) am Kraftaufnehmer befestigt. Der Reibklotz mit dem Probenkörper 2 wird vorsichtig auf den Probenkörper 1 so aufgelegt, dass sich die Testseiten berühren. Die Verbindung zum Kraftaufnehmer sollte dabei noch nicht gespannt sein. 15 Sekunden nach Auflegen des Reibklotzes wird der Versuch gestartet. Nach etwa 60 mm Reibungsweg kann der Versuch beendet werden. Die Prüfgeschwindigkeit beträgt 100 m pro Minute auch für den Vor- und Nachmessweg.

Auswertung: Der Vormessweg von 10 mm sowie der Nachmessweg von 10 mm werden zur Auswertung nicht herangezogen. Der Kraftverlauf einer längeren Gleitbewegung weicht infolge von Sekundäreffekten oft vom Ideal eines konstanten Niveaus ab. Für die Ermittlung der Gleitreibungszahl $\mu$ wird nur der Kraftverlauf des Wegs von 60 mm herangezogen.

Die Gleitreibungszahl $\mu$ ergibt sich nach folgender Formel: $\mu$: $\mu = F_D : F_N$, wobei $F_D$ die Gleitreibungskraft in Newton und $F_N$ die Normalkraft in Newton ist (gemäß Norm hier: $F_N = 1,96$ N). Es soll hierbei eine Probenzahl von mindestens n = 5 verwendet werden und es wird der Mittelwert sowie die Standardabweichung auf zwei Nachkommastellen gerundet. Auf diese Weise wurde hier die Gleitreibung des Vlies-/Folienlaminats ermittelt.

Wasserdampfdurchgangswiderstand:

Zur Messung des Wasserdampfdurchgangswiderstandes $R_{et}$ = (m² Pa/W) erfolgte wie folgt:

- Prüfgerät: Thermoregulationsmodell der menschlichen Haut (Hautmodell, Forschungsinstitut Hohenstein, Schloss Hohenstein, 74357 Bönningheim, Deutschland))

- Prüfbedingungen: DIN 31092 (02/94) bzw. ISO 11092 (10/93)

- Prüfklima: Temperatur 35° C, 40 % relative Feuchte.

Es wurde hierbei ein Mittel aus drei Einzelmessungen an drei verschiedenen Probenabschnitten des Musters gebildet.

Hierbei gilt, dass insbesondere bei Bekleidungsstücken diese aus bekleidungsphysiologischer Sicht umso günstiger zu beurteilen sind, je niedriger der materialspezifische Wasserdampfdurchgangswiderstand $R_{et}$ ausfällt, da damit eine umso bessere Schweißverdampfung vom Körper des Trägers möglich ist. Aufgrund von Forschungsarbeiten können zur Beurteilung der physiologischen Güte von Textilien mit Barrierewirkung, insbesondere für OP-Kleidung folgende Kriterien angesetzt werden: $R_{et} \leq 8$ m² Pa/W = sehr gut, $R_{et} > 40$ m²Pa/W = ungenügend.

Linting-Koeffizient:

Die Feststellung des Linting-Koeffizienten erfolgt nach dem internationalen Standard ISO 9073-10. Zur Messung wurde ein Gerät Gelbo Flex 5000 der Firma Instrument Marketing Services/Fairfield sowie ein Counter LS 31C der Firma SFP verwandt.

Dickenmessung:

Die Methode dient zur Dickenbestimmung von flächigen Gebilden unter definierter Belastung, unter Verwendung eines mechanischen Dickenmessgerätes mit Messskala und verschiedenen Gewichten sowie einer Messfläche von 25 cm² und einer Skaleneinteilung von 0,01 mm. Aus dem Probenmaterial wird ein Prüfmuster ausreichender Größe ausgeschnitten und das Prüfmuster an das Normklima (23° C, 50 % Feuchte) angeglichen. Das Dickenmessgerät wird gemäß Bedienungsanleitung in Betrieb genommen und die Dicke wird nach Vorgabe unter einer Belastung von 5 g/cm² in Millimeter auf 0,01 mm genau gemessen. Die Auswertung erfolgt, indem die Dicke an fünf Proben in Millimeter gemessen und daraus der Durchschnittswert ermittelt und auf zwei Dezimalen gerundet wird.

Die erfindungsgemäßen Größenangaben entsprechen dabei, sofern nichts anderes angegeben ist, dem jeweils nach der angegebenen Prüfmethode ermittelten Mittelwert.

Schließlich soll die Erfindung anhand eines Beispiels im Folgenden näher erläutert werden.

Weitere Vorteile und Merkmale der Erfindung ergeben sich aus dem nachfolgenden Beispiel sowie seiner Beschreibung:

Das Beispiel betrifft ein Vlies-/Folienlaminat, das symmetrisch zur Folienmittelschicht aus zwei Lagen Vlies und einer mikroporösen Folie geschichtet ist. Dabei besteht jede Lage Vlies aus einem Spunbond/Meltblown/Meltblown/ Spunbond-Laminat (SMMS), das thermoverfestigt ist und seinerseits symmetrisch aufgebaut ist. Die beiden Mittellagen des Meltblown sind nach der Herstellung nicht mehr separat feststellbar. Der Verbund der Vliesstofflage mit der Folie erfolgt mittels eines Hotmeltadhäsivs mit einem Flächenauftrag von 2 g/m² pro zu verbindender Fläche. Der Auftrag ist nicht vollflächig und erfolgt in einem Kontakt-Beschichtungsverfahren gemäß der EP 568 812 A1 über steuerbare Breitschlitzdüsen. Hierbei weist der Vliesstoff folgende Eigenschaften auf:

- Flächengewicht 17 g/m²,
- Aufteilung SMMS = 6, 8 - 1, 7 - 1,7 - 6,8 [g/m²],

Der Vliesstoff besteht aus verschiedenen Polypropylenen (PP). Keine der Lagen wird einer antistatischen Oberflächenbehandlung unterzogen oder nachträglich hydrophobisiert.

Die Folie besteht aus einem thermoplastischen Polymerblend aus low density Polyethylen (LDPE) sowie einem linear-low density Polyethylen (LLDPE) und einem Füllstoff, hier Kalziumkarbonat ($CaCO_3$).

Die Folie ist dabei einlagig und unelastisch und hat ein Flächengewicht von 25 g/m$^2$ und weist eine Filmstärke von 25 $\mu$m auf. In der Folie sind 50 Gew.-% ($\pm$ 12 Gew.-%) Kalziumkarbonat enthalten, das einen mittleren Teilchendurchmesser von kleiner 2 $\mu$m aufweist. Um die Folie mit Mikroporen auszustatten, wird sie uniaxial in Maschinenrichtung gestreckt.

Das Laminat wurde dann nach den vorstehend beschriebenen Methoden Tests u. a. zur Bestimmung der Parameter und zum Schrumpfverhalten unterzogen. Dabei erfolgte die Wärmebehandlung in einem Wärmeschrank bei 54° C und 70 % relativer Luftfeuchte, Dauer 6 Stunden. Es konnten folgende Werte ermittelt werden:

1. Längenveränderung(Laminat) durch Wärmebehandlung

Die Messungen wurden an 5 gleichgroßen, ausgestanzten Materialstücken in der Größe von 206 mm x 294 mm (MD x CD) durchgeführt. Alle 5 Muster hatten nach der Wärmebehandlung im erkalteten Zustand bei Raumtemperatur eine Größe von 200 mm x 296 mm (MD x CD).

<div align="center">

Längenveränderung in Maschinenrichtung (MD):   -2,9 %
Längenveränderung in Querrichtung (CD):     +0,7 %

</div>

2) Flächengewicht (F) / g/ m$^2$ - gemittelt über 10 Messungen (Mittelwert und Standardabweichung), gemessen mit Mettler Toledo PB 3002

<div align="center">

F (vor Wärmebehandlung)      = 63,2 g/ m$^2$ (s = 1,7 g/ m$^2$)
F (nach Wärmebehandlung)    = 65,6 g/ m$^2$ (s = 1,0 g/ m$^2$)

</div>

Das Flächengewicht erhöht sich dabei im Mittel durch die Wärmebehandlung um ca. 4 %.

3) Dickenmessung, Dicke (D) / mm - gemittelt über 10 Messungen (Mittelwert und Standardabweichung)

<div align="center">

D (vor Wärmebehandlung)      = 0,43 mm (s = 0,005 mm)
D (nach Wärmebehandlung)    = 0,66 mm (s = 0,020 mm)

</div>

Die Dicke erhöht sich dabei im Mittel durch die Wärmebehandlung um ca. 53 %.

4) Gleitreibungskoeffizient $\mu$ - gemittelt über 10 Messungen (Mittelwert und Standardabweichung)

$\mu$ (MD, vor Wärmebehandlung)= 0,46 (s = 0,04)
$\mu$ (MD, nach Wärmebehandlung)= 0,52 (s = 0,07)
$\mu$ (CD, vor Wärmebehandlung)= 0,48 (s = 0,04)
$\mu$ (CD, nach Wärmebehandlung)= 0,57 (s = 0,06)

Es wurde daraufhin eine Prüfung nach der Sterilisation mit Ethylenoxid und Wärme mit den gleichen Bedingungen wie vorher durchgeführt (54°C, 70% relative Luftfeuchte, Dauer 6h):

1) Längenveränderung(Laminat):

Die Messungen wurden an 5 gleichgroßen, ausgestanzten Materialstücken in der Größe von 206 mm x 294 mm (MD x CD) durchgeführt. Alle 5 Muster hatten nach der Sterilisation im erkalteten Zustand bei Raumtemperatur eine Größe von 200 mm x 296 mm (MD x CD).

<div align="center">

Längenveränderung in Maschinenrichtung (MD):   -3,0 %
Längenveränderung in Querrichtung (CD):     0,0 %

</div>

2) Flächengewicht (F) / g/ m$^2$ - gemittelt über 10 Messungen (Mittelwert und Standardabweichung)

Gemessen mit Mettler Toledo PB 3002

$$F \text{ (vor Wärmebehandlung)} = 65{,}2 \pm 1{,}3 \, \text{g/ m}^2$$
$$F \text{ (nach Wärmebehandlung)} = 66{,}6 \pm 1{,}0 \, \text{g/ m}^2$$

Das Flächengewicht erhöht sich dabei im Mittel durch die Wärmebehandlung um ca. 2 %.

3) Dickenmessung, Dicke (D) / mm - gemittelt über 5 Messungen (Mittelwert und Standardabweichung)

$$D \text{ (vor Wärmebehandlung)} = 0{,}43 \pm 0{,}005 \, \text{mm}$$
$$D \text{ (nach Wärmebehandlung)} = 0{,}68 \pm 0{,}005 \, \text{mm}$$

Die Dicke erhöht sich dabei im Mittel durch die Wärmebehandlung um ca. 58 %.

4) Gleitreibungskoeffizient μ - gemittelt über 5 Messungen (Mittelwert und Standardabweichung)

$$\mu \text{ (MD, vor Wärmebehandlung)} = 0{,}46 \pm 0{,}02$$
$$\mu \text{ (MD, nach Wärmebehandlung)} = 0{,}51 \pm 0{,}02$$
$$\mu \text{ (CD, vor Wärmebehandlung)} = 0{,}51 \pm 0{,}03$$
$$\mu \text{ (CD, nach Wärmebehandlung)} = 0{,}52 \pm 0{,}03$$

5) Wasserdampfdurchlässigkeit (WVTR) / g/ m$^2$/ 24h (Klima B) - gemittelt über 5 Messungen (Mittelwert und Standardabweichung), nach DIN 53 122-1

$$WVTR \text{ (vor Wärmebehandlung)} = 5182 \pm 115 \, \text{g/ m}^2 \text{- 24h}$$
$$WVTR \text{ (nach Wärmebehandlung)} = 5149 \pm 252 \, \text{g/ m}^2 \text{- 24h}$$

6) Wassersäule (W) / cm bei einem Gradienten von 60 mbar/ min - gemittelt über 5 Messungen (Mittelwert und Standardabweichung)

Nach EN 20 811, Gerät Textest FX 3000

$$W \text{ (vor Wärmebehandlung)} = 565 \pm 45 \, \text{cm}$$
$$W \text{ (nach Wärmebehandlung)} = 592 \pm 20 \, \text{cm}$$

7) Wasserdampfdurchgangswiderstand - gemittelt über 3 Messungen

$$R_{et} = 25{,}07 \, \text{m}^2 \, \text{Pa/W}$$

Weiterhin wurden Linting-Werte ermittelt über 5 Proben, wobei jeweils beide Seiten gemessen wurden. Die Ergebnisse lagen dabei zwischen 1,28 und 2,49, was einer Teilchenmenge größer 3 μm pro Probe von zwischen 19 und 310 entspricht.

8.) Linting (L) / Anzahl der Partikel > 3 $\mu$m Gelbo Flex 5000 ES von Instrument Marketing Services aus Fairfield; Counter LS 31C von der Fa. SFP

Es wurde steriles Material, das gemäß den genannten Bedingungen sterilisiert wurde, getestet - 5 Messungen je Seite (Mittelwert und Standardabweichung)

$$L \ (Seite \ 1) \ = \ 130 \ \pm \ 116$$

$$L \ (Seite \ 2) \ = \ 105 \ \pm \ 113$$

Die Erfindung stellt auf diese Weise ein Material bereit, das besonders für den Einsatz in OP-Materialien, wie beispielsweise OP-Schürzen und Mäntel, OP-Hauben aber auch Abdecktüchern aufgrund seiner angenehmen textilen Eigenschaften und gleichzeitig seines geringen Linting-Koeffizienten eine besonders günstige Einsatzmöglichkeit darstellt. Darüber hinaus ist die Fertigung des Materials einfach und auch eine Weiterverarbeitung kann unproblematisch bereitgestellt werden.

**Patentansprüche**

1. Vlies-/Folienlaminat umfassend eine Folie und auf beiden Seiten der Folie eine Vliesschicht, **dadurch gekennzeichnet, dass** mindestens eine eine Sichtseite des Laminats bildende Oberfläche der Vliesschicht einen Gleitreibungskoeffizienten zwischen $\mu = 0{,}35$ und $0{,}75$ aufweist, wobei die Vliesschicht Spunbond- und Meltblownschichten umfasst, und wobei das Laminat einer Wassersäule von $W > 400$ cm, insbesondere $W > 500$ cm standhält, hergestellt umfassend einen Wärmebehandlungsvorgang und eine damit einhergehende Längenverkürzung in Ebenenrichtung und wobei die Längenverkürzung in zumindest eine Richtung mindestens 2% der Länge einer Probe des Laminats in dieser Richtung und höchstens 6% der Länge der Probe in dieser Richtung beträgt.

2. Vlies-/Folienlaminat nach Anspruch 1, **dadurch gekennzeichnet, dass** der Gleitreibungskoeffizient zwischen $\mu = 0{,}40$ und $0{,}70$ liegt.

3. Vlies-/Folienlaminat nach Anspruch 1 oder 2, **dadurch gekennzeichnet, dass** der Gleitreibungskoeffizient zwischen $\mu = 0{,}45$ und $0{,}65$ liegt.

4. Vlies-/Folienlaminat nach einem der vorangehenden Ansprüche, **dadurch gekennzeichnet, dass** die mindestens eine Sichtseite des Laminats bildende Oberfläche der Vliesschicht einen Linting-Koeffizienten kleiner 2,7 aufweist.

5. Vlies-/Folienlaminat nach Anspruch 4, **dadurch gekennzeichnet, dass** der Linting-Koeffizient kleiner 2,5 ist und insbesondere kleiner 2,2.

6. Vlies-/Folienlaminat nach einem der vorangehenden Ansprüche 1 bis 5, **dadurch gekennzeichnet, dass** eine oder beide Vliesschichten ein Spunbond-/Meltblown-/Spunbond-Laminat ist.

7. Vlies-/Folienlaminat nach einem der vorangehenden Ansprüche 1 bis 5, **dadurch gekennzeichnet, dass** eine oder beide Vliesschichten ein Spunbond-/Meltblown-/Meltblown-/Spunbond-Laminat ist.

8. Vlies-/Folienlaminat nach einem der vorangehenden Ansprüche, **dadurch gekennzeichnet, dass** eine oder beide Vliesschichten thermoverfestigt sind.

9. Vlies-/Folienlaminat nach einem der vorangehenden Ansprüche, **dadurch gekennzeichnet, dass** eine oder beide Vliesschichten hydrophob sind.

10. Vlies-/Folienlaminat nach einem der vorangehenden Ansprüche, **dadurch gekennzeichnet, dass** das Laminat eine Wasserdampfdurchlässigkeit von WVTR > 4000 g/m$^2$/24h aufweist.

11. Vlies-/Folienlaminat nach einem der vorangehenden Ansprüche, **dadurch gekennzeichnet, dass** die Folie mikroporös ist.

12. Vlies-/Folienlaminat nach einem der vorangehenden Ansprüche, **dadurch gekennzeichnet, dass** die Folie Polyolefine, insbesondere Polyethylene umfasst.

13. Vlies-/Folienlaminat nach einem der vorangehenden Ansprüche, **dadurch gekennzeichnet, dass** die Folie einen nicht polymeren, partikelförmigen Füllstoff, insbesondere $CaCO_3$ umfasst.

14. Vlies-/Folienlaminat nach einem der vorangehenden Ansprüche, **dadurch gekennzeichnet, dass** die Längenverkürzung in Ebenenrichtung im Wesentlichen nur in einer Richtung erfolgt.

15. Vlies-/Folienlaminat nach einem der vorangehenden Ansprüche, **dadurch gekennzeichnet, dass** die Vliesschichten mit der Folie durch einen Kleber verbunden sind.

16. Vlies-/Folienlaminat nach Anspruch 15, **dadurch gekennzeichnet, dass** der Kleber nicht vollflächig aufgebracht ist.

17. Vlies-/Folienlaminat nach Anspruch 15 oder 16, **dadurch gekennzeichnet, dass** der Kleber ein Heißschmelzkleber ist.

18. Vlies-/Folienlaminat nach einem der vorangehenden Ansprüche, **dadurch gekennzeichnet, dass** das Vlies-/Folienlaminat insbesondere symmetrisch zur Folie aufgebaut ist.

19. Vlies-/Folienlaminat nach einem der vorangehenden Ansprüche, **dadurch gekennzeichnet, dass** als Wärmebehandlungsvorgang ein Sterilisationsvorgang für das Vlies-/Folienlaminat dient.

20. Verwendung eines Vlies-/Folienlaminats nach einem der vorangehenden Ansprüche, für ein wegwerfbares, insbesondere sterilisierbares Bekleidungsstück.

21. Verfahren zur Herstellung eines Vlies-/Folienlaminats nach einem oder mehreren der vorstehenden Ansprüche, **dadurch gekennzeichnet, dass** ein Schichtenverbund aus der Folie und den mit der Folie verbundenen Vliesschichten einer Wärmebehandlung unterzogen wird und dabei eine Längenverkürzung in Ebenenrichtung des Schichtenverbunds herbeigeführt wird.

22. Verfahren nach Anspruch 21, **dadurch gekennzeichnet, dass** die Wärmebehandlung bei Temperaturen zwischen 45° und 100°C, insbesondere zwischen 45° und 90°C, insbesondere zwischen 45° und 80° und weiter insbesondere zwischen 50° und 65°C durchgeführt wird.

23. Verfahren nach Anspruch 21 oder 22 **dadurch gekennzeichnet, dass** die Längenverkürzung in Ebenenrichtung im Wesentlichen nur in einer Richtung herbeigeführt wird.

24. Wegwerfbares Bekleidungsstück, **dadurch gekennzeichnet, dass** seine flächenbildenden Wandungen aus dem Vlies-/Folienlaminat nach einem oder mehreren der vorstehenden Ansprüche bestehen.

**Claims**

1. Nonwoven/sheet laminate comprising a sheet and a nonwoven layer on both sides of the nonwoven, **characterised in that** at least one surface of the nonwoven layer forming a visible side of the laminate has a sliding coefficient of friction between $\mu = 0.35$ and 0.75, whereby the nonwoven layer comprises spunbond and meltblown layers, and whereby the laminate can resist a water column of W > 400 cm, in particular W > 500 cm, and its manufacturing involves a heat treatment process accompanied by a reduction in length in the flat direction and whereby the reduction in length in at least one direction amounts to at least 2% of the length of a sample of the laminate in this direction and a maximum of 6% of the length of the sample in this direction.

2. Nonwoven/sheet laminate in accordance with claim 1, **characterised in that** the sliding coefficient of friction lies between $\mu = 0.40$ and 0.70.

3. Nonwoven/sheet laminate in accordance with claim 1 or 2, **characterised in that** the sliding coefficient of friction lies between $\mu$ = 0.45 and 0.65.

4. Nonwoven/sheet laminate in accordance with one of the preceding claims, **characterised in that** the surface of the nonwoven layer forming at least one visible side of the laminate has a linting coefficient less than 2.7.

5. Nonwoven/sheet laminate in accordance with claim 4, **characterised in that** the linting coefficient is less than 2.5 and in particular less than 2.2.

6. Nonwoven/sheet laminate in accordance with one of the preceding claims 1 to 5, **characterised in that** one or both nonwoven layers is/are a spunbond/meltblown/spunbond laminate.

7. Nonwoven/sheet laminate in accordance with one of the preceding claims 1 to 5, **characterised in that** one or both nonwoven layers is/are a spunbond/meltblown/meltblown/spunbond laminate.

8. Nonwoven/sheet laminate in accordance with one of the preceding claims, **characterised in that** one or both nonwoven layers is/are thermally solidified.

9. Nonwoven/sheet laminate in accordance with one of the preceding claims, **characterised in that** one or both nonwoven layers is/are hydrophobic.

10. Nonwoven/sheet laminate in accordance with one of the preceding claims, **characterised in that** the laminate has a water vapour permeability of WVTR > 4000 $g/m^2/24$ hrs.

11. Nonwoven/sheet laminate in accordance with one of the preceding claims, **characterised in that** the sheet is microporous.

12. Nonwoven/sheet laminate in accordance with one of the preceding claims, **characterised in that** the sheet comprises polyolefins, in particular polyethylene.

13. Nonwoven/sheet laminate in accordance with one of the preceding claims, **characterised in that** the sheet comprises a non-polymeric, particulate filler, in particular, $CaCO_3$.

14. Nonwoven/sheet laminate in accordance with one of the preceding claims, **characterised in that** the reduction in length in the flat direction takes place essentially in one direction only.

15. Nonwoven/sheet laminate in accordance with one of the preceding claims, **characterised in that** the nonwoven layers are connected to said sheet by an adhesive.

16. Nonwoven/sheet laminate in accordance with claim 15, **characterised in that** the adhesive is not disposed over an entire surface.

17. Nonwoven/sheet laminate in accordance with claim 15 or 16, **characterised in that** said adhesive is a hot melt adhesive.

18. Nonwoven/sheet laminate in accordance with one of the preceding claims, **characterised in that** the nonwoven/ sheet laminate is structured in particular symmetrically relative to said sheet.

19. Nonwoven/sheet laminate in accordance with one of the preceding claims, **characterised in that** a sterilisation process serves as a heat treatment process for the nonwoven/sheet laminate.

20. Application of a nonwoven/sheet laminate in accordance with one of the preceding claims for a disposable item of clothing, in particular, an item of clothing that can be sterilised.

21. Method of producing a nonwoven/sheet laminate in accordance with one or more of the preceding claims, **characterised in that** a layer composite of said sheet and nonwoven layers connected to said sheet is subjected to heat treatment, thereby reducing the length in a flat direction of the layer composite.

**22.** Method in accordance with claim 21, **characterised in that** the heat treatment is performed at a temperature between 45° and 100° C, in particular between 45° and 90° C, in particular between 45° and 80 C, and further in particular between 50° and 65° C.

**23.** Method in accordance with claim 21 or 22, **characterised in that** the reduction in length occurs substantially in one direction only.

**24.** Disposable item of clothing, **characterised in that** its surface-forming walls are made from the nonwoven/sheet laminate in accordance with one or more of the preceding claims.


**Revendications**

**1.** Stratifié de non-tissé et film comprenant un film et, sur les deux faces du film, une couche de non-tissé, **caractérisé en ce qu'**au moins une surface de la couche de non-tissé formant une face visible du stratifié possède un coefficient de frottement de glissement compris entre $\mu = 0,35$ et $0,75$, la couche de non-tissé comportant des couches spunbond (par voie filage direct) et meltblown (par voie fondue soufflée), et le stratifié résistant à une colonne d'eau de W > 400 cm, en particulier de W > 500 cm, la fabrication du stratifié comportant une opération de traitement thermique accompagnée d'un raccourcissement de longueur dans le plan et le raccourcissement de longueur dans au moins une direction étant égal au moins à 2 % de la longueur d'un échantillon du stratifié dans cette direction et au plus à 6 % de la longueur de l'échantillon dans cette direction.

**2.** Stratifié de non-tissé et film selon la revendication 1, **caractérisé en ce que** le coefficient de frottement de glissement est compris entre $\mu = 0,40$ et $0,70$.

**3.** Stratifié de non-tissé et film selon les revendications 1 ou 2, **caractérisé en ce que** le coefficient de frottement de glissement est compris entre $\mu = 0,45$ et $0,65$.

**4.** Stratifié de non-tissé et film selon l'une des revendications précédentes, **caractérisé en ce que** la surface de la couche de non-tissé formant au moins une couche visible du stratifié présente un coefficient de peluchage inférieur à 2,7.

**5.** Stratifié de non-tissé et film selon la revendication 4, **caractérisé en ce que** le coefficient de peluchage est inférieur à 2,5 et en particulier inférieur à 2,2.

**6.** Stratifié de non-tissé et film selon l'une des revendications précédentes 1 à 5, **caractérisé en ce que** l'une ou les deux couches de non-tissé est/sont un stratifié spunbond-meltblown-spunbond.

**7.** Stratifié de non-tissé et film selon l'une des revendications précédentes 1 à 5, **caractérisé en ce que** l'une ou les deux couches de non-tissé est/sont un stratifié spunbond-meltblown-meltblown-spunbond.

**8.** Stratifié de non-tissé et film selon l'une des revendications précédentes, **caractérisé en ce que** l'une ou les deux couches de non-tissé est/sont consolidée(s) par liage thermique.

**9.** Stratifié de non-tissé et film selon l'une des revendications précédentes, **caractérisé en ce que** l'une ou les deux couches de non-tissé est/sont hydrophobe(s).

**10.** Stratifié de non-tissé et film selon l'une des revendications précédentes, **caractérisé en ce que** le stratifié présente une perméabilité à la vapeur d'eau de WVTR > 4000 g/m$^2$/24 h.

**11.** Stratifié de non-tissé et film selon l'une des revendications précédentes, **caractérisé en ce que** le film est microporeux.

**12.** Stratifié de non-tissé et film selon l'une des revendications précédentes, **caractérisé en ce que** le film comporte des polyoléfines, en particulier des polyéthylènes.

**13.** Stratifié de non-tissé et film selon l'une des revendications précédentes, **caractérisé en ce que** le film comporte une matière de charge non polymère, sous forme de particules, en particulier du $CaCO_3$.

14. Stratifié de non-tissé et film selon l'une des revendications précédentes, **caractérisé en ce que** le raccourcissement de longueur dans le plan a lieu essentiellement dans une seule direction.

15. Stratifié de non-tissé et film selon l'une des revendications précédentes, **caractérisé en ce que** les couches de non-tissé sont liées au film par un adhésif.

16. Stratifié de non-tissé et film selon la revendication 15, **caractérisé en ce que** l'adhésif n'est pas appliqué sur toute la surface.

17. Stratifié de non-tissé et film selon les revendications 15 ou 16, **caractérisé en ce que** l'adhésif est un adhésif thermofusible.

18. Stratifié de non-tissé et film selon l'une des revendications précédentes, **caractérisé en ce que** le stratifié de non-tissé et film est en particulier construit symétriquement au film.

19. Stratifié de non-tissé et film selon l'une des revendications précédentes, **caractérisé en ce qu'**une opération de stérilisation pour le stratifié de non-tissé et film fait office d'opération de traitement thermique.

20. Utilisation d'un stratifié non-tissé et film selon l'une des revendications précédentes pour un vêtement à usage unique, en particulier stérilisable.

21. Procédé pour la fabrication d'un stratifié de non-tissé et film selon l'une ou plusieurs des revendications précédentes, **caractérisé en ce qu'**un composite stratifié composé du film et des couches de non-tissé liées au film est soumis à un traitement thermique et qu'un raccourcissement de longueur dans le plan du composite stratifié est ainsi provoqué.

22. Procédé selon la revendication 21, **caractérisé en ce que** le traitement thermique est réalisé à des températures comprises entre 45° et 100°C, en particulier entre 45° et 90°C, en particulier entre 45° et 80°C et en particulier encore entre 50° et 65°C.

23. Procédé selon les revendications 21 ou 22, **caractérisé en ce que** le raccourcissement de longueur dans le plan est provoqué essentiellement dans une seule direction.

24. Vêtement à usage unique, **caractérisé en ce que** ses parois formant des surfaces sont réalisées en stratifié de non-tissé et film selon l'une ou plusieurs des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9914262 A
- WO 0020208 A
- EP 1298240 A1
- EP 0912788 B1
- WO 9702130 A
- EP 568812 A1